Europäisches Patentamt

European Patent Office

Office européen des brevets

(19)

(11) Publication number: **0 109 790**
**A2**

(12)

# EUROPEAN PATENT APPLICATION

(21) Application number: **83306684.8**

(22) Date of filing: **02.11.83**

(51) Int. Cl.³: **B 01 J 7/00**
//B60R21/08, B63C9/18,
B64D25/14

(30) Priority: **15.11.82 US 441563**

(43) Date of publication of application:
**30.05.84 Bulletin 84/22**

(84) Designated Contracting States:
**DE FR GB SE**

(71) Applicant: **Rocket Research Company**
**York Center**
**Redmond Washington 98052(US)**

(72) Inventor: **Jorgenson, Walmer E.**
**2515 158th S.E.Bellevue**
**Washington 98008(US)**

(74) Representative: **Arthur, Bryan Edward et al,**
**Withers & Rogers 4 Dyer's Buildings Holborn**
**London EC1N 2JT(GB)**

(54) Apparatus for controlling the outflow of gas from a propellant augmented, pressurized gas dispensing device.

(57) A propellant augmented, pressurized gas dispensing device includes a high pressure gas chamber, a propellant chamber and a flow passage placing the two chambers in fluid communication. A valve is associated with the flow passage for allowing bidirectional flow between the chambers at differing flow rates. The valve allows relatively rapid flow from the propellant chamber into the gas chamber while restricting the flow from the gas chamber.

Fig.1.

## APPARATUS FOR CONTROLLING THE OUTFLOW OF GAS
## FROM A PROPELLANT AUGMENTED,
## PRESSURIZED GAS DISPENSING DEVICE

### Background of the Invention

The present invention relates to a propellant augmented, gas dispensing device, and more particularly to such a device that incorporates apparatus for controlling the release of pressurized gas while allowing rapid depressurization of the propellant chamber to assure extinguishment of unused propellant.

Propellant augmented, gas dispensing devices are utilized for a variety of purposes, including the pressurization of inflatable assemblies, such as escape slides, lift rafts, and airbag safety cushions in automobiles. Typical gas dispensing devices of this type have first and second chambers. The first chamber is a storage chamber that carries a relatively inert gas, for example carbon dioxide, under pressure, while the second chamber carries a solid propellant, for example ammonium nitrate. The propellant is utilized as an energy source to heat and pressurize the carbon dioxide gas stored in the first chamber to temperatures on the order of $180^O$F and pressures on the order of 5000 psi. Normally, the propellant will heat and pressurize the gas in less than one second. When the gas is pressurized, an outlet burst disc in the exhaust passage from the propellant chamber will rupture, allowing the pressurized gas to pass through the propellant chamber and out the exhaust passage to permit the pressurized gas to do useful work, for example inflate a life raft or other suitable assembly.

These propellant augmented, dispensing devices are designed for operation over ambient temperatures ranging from, for example, $-65^O$F to $160^O$F. At lower temperatures, almost all of the solid propellant charge is required to heat the carbon dioxide to $180^O$F and pressurize the gas in the storage vessel to approximately 5000 psi. However, when the dispensing device is at a temperature in the intermediate and upper reaches of the operational range, only a portion of the solid propellant is required to pressurize the gas to the desired pressure. Since it is desired that the pressurized gas dispensed from the device be relatively cool, that is, not much hotter than approximately 180°F, it is necessary that the propellant be extinguished immediately after the outlet burst disc ruptures. The propellant is normally extinguished by allowing rapid depressurization of the propellant chamber.

It is, however, sometimes desirable to meter or restrict the flow of pressurized gas from the gas dispensing device in order to dispense the gas at a relatively low rate. If a restriction is placed in the exhaust channel from the propellant chamber, rapid depressurization of the propellant chamber cannot be achieved, and thus, unused propellant may continue to burn, undesirably raising the temperature of the gas being dispensed by the device. Alternatively, a restriction cannot be placed in the flow passage between the gas chamber and the propellant chamber because the flow rate from the propellant chamber to the gas chamber would also be restricted, causing premature rupturing of the outlet burst disc and inadequate pressurization of the gas in the gas chamber.

## Summary of the Invention

The present invention provides an improvement that allows the flow from a propellant augmented, gas dispensing device to be metered while at the same time allowing rapid depressurization of the propellant chamber to assure propellant extinguishment. The pressurized gas dispensing device constructed in accordance with the present invention includes means defining a first chamber for holding a gas under pressure, means defining a second chamber for holding a propellant, and means defining a flow passage placing the first and second chambers in fluid communication. The improvement comprises valve means associated with the flow passage between the first and second chambers for allowing bidirectional flow between the chambers at different flow rates. The valve means is designed so that the flow rate from the second chamber to the first chamber is greater than the flow rate from the first chamber to the second chamber. In a preferred embodiment, the burst disc is associated with an exhaust passage from the second chamber. The valve means comprises a flapper valve that seats against the inlet opening to the flow passage from the gas chamber. The flapper valve has an orifice in it of smaller diameter than the flow passage. As propellant flows into the gas chamber, the flapper valve flexes away from the inlet opening to allow full capacity flow through the flow passage. When the outlet burst disc ruptures and the pressure in the first chamber exceeds that in the second, the flapper valve seats against the inlet opening and outflow occurs only through the orifice in the flapper valve. In this manner, rapid depressurization of the propellant chamber is accomplished upon rupturing of the outlet burst disc, assuring propellant extinguishment, while yet providing for metered outflow of pressurized gas from the first gas chamber.

## Brief Description of the Drawings

A better understanding of the present invention can be derived by reading the ensuing specification in conjunction with the accompanying drawings wherein:

FIGURE 1 is a schematic elevation view in partial cross section of a propellant augmented, gas dispensing device employing the flow control device of the invention shown in its position during propellant burn;

FIGURE 2 is a view similar to FIGURE 1 showing the flow metering device during the gas dispensing mode; and

FIGURE 3 is a view of the metering device taken along view line 3--3 of FIGURE 2.

## Detailed Description of the Invention

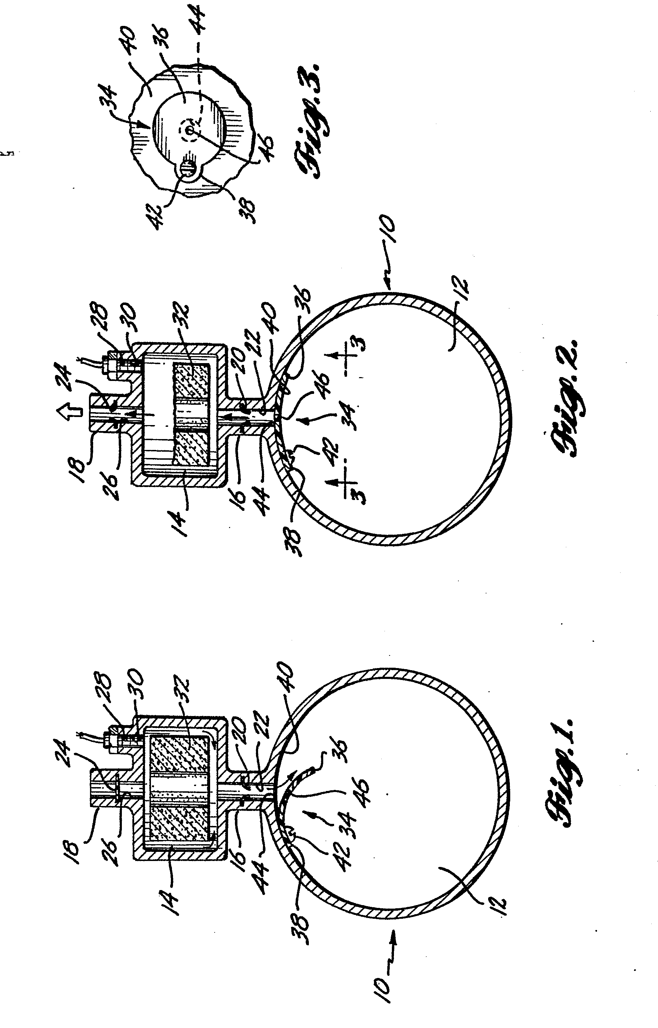

Referring first to FIGURE 1, the propellant augmented, pressurized gas dispensing device 10 is shown in schematic form and includes a pressurized gas chamber 12, a propellant chamber 14, interconnecting conduit 16, and an exhaust conduit 18. Although these several portions of the dispensing device are shown as a single element, one of ordinary skill, however, will readily recognize that these portions will normally be made as separate components that are assembled and conventionally fastened together to form a unitary assembly. A low pressure burst disc 20 is interposed in the passage 22 defined within conduit 16. A high pressure burst disc 24 is situated in the exhaust passage 26 defined within the exhaust conduit 18. A conventional squib or cap 28 is inserted in an appropriate recess 30 for ignition of a propellant 32 positioned within the propellant chamber 14. The squib or cap can be of the electrically or percussion actuated type depending upon the environment of use of the gas dispensing device. One of ordinary skill will be able to integrate an appropriate ignition device as desired.

The gas dispensing device is generally constructed in accordance with techniques known in the art. The passage 22 between the propellant chamber 14 and the gas chamber 12 is equally sized with the exhaust passage 26 from the propellant chamber 14. The sizing and construction of these passages is dictated by the desire to allow the heated and pressurized gas produced by the burning propellant easy ingress to the gas chamber 12 after the low pressure burst disc ruptures. Similarly, once the dispensing pressure has been reached and the high pressure burst disc 24 ruptures, the exhaust passage 26 is sized and constructed so that the propellant chamber 14 is rapidly depressurized and any unused propellant is extinguished.

As stated above, however, in some applications it is desirable to meter or restrict the flow of gas from the dispensing device so as to control the rate of inflation, for example, of a raft or slide. Metered outflow cannot be accomplished by placing a restriction in the exhaust passageway 26 because rapid depressurization of the propellant chamber cannot be achieved, and, thus, extinguishment of unused propellant cannot be achieved. On the other hand, a permanent restriction cannot be interposed in the passageway 22 as the heated gas produced by the burning propellant will be unable to transfer its heat energy to the gas in the pressurized gas chamber 12 at a sufficiently rapid rate, causing the pressure in the propellant chamber to rapidly rise and prematurely rupture the high pressure burst disc 24. As a result, the gas in the gas chamber 12 will not be raised to the desired temperature and pressure by the propellant.

To solve this problem, the present invention provides a valve assembly, generally designated 34, that is associated with the passageway 22 that extends between the propellant chamber 14 and the pressurized gas chamber 12. In the preferred embodiment illustrated in FIGURES 1 and 2, the valve assembly 34 comprises a flexible flapper valve 36. The flapper valve comprises a disc-shaped member having a semicircular protrusion 38 along its periphery having a diameter of about one-third that of the disc-shaped member. The protrusion 38 serves as a connecting point to connect the flapper valve 36 to the interior wall 40 of the gas chamber 12. The flapper valve is fastened to the interior wall 40 by a suitable conventional fastener 42, for example, a small bolt or screw that extends through an opening in the protrusion 38 into a threaded recess in the gas chamber wall. The flapper valve 36 is positioned so that it overlies that inlet opening 44 into the passage 22. In its relaxed state, the flapper valve 36 completely covers the inlet opening 44 and is biased toward that opening. The periphery of the flapper valve 36 contacts that portion of the interior wall 40 of the gas chamber 12 surrounding the inlet opening 44 in sealing relationship. The central portion of the disc carries an orifice 46 that has a diameter less than the diameter of the passage 22. The valve assembly 34 thus functions to allow flow in both directions through the passage 22. In one direction, from the propellant chamber to the gas chamber, the gas flow causes the flapper valve 36 to flex away from the inlet opening 44, thus opening the passage 22 and allowing full capacity flow therethrough. On the other hand, when the pressure is greater in the gas chamber 12 than in the propellant

chamber 14, the flapper valve flexes to the position covering the inlet opening 44 so that flow can occur only through the metering orifice 46.

Referring back to FIGURE 1, the propellant augmented, pressurized gas dispensing device 10 of the present invention is operated by first initiating the squib 28 to ignite the propellant 32. As the propellant ignites, it produces hot, high pressure gas. As the pressure in the propellant chamber 14 increases, the low pressure burst disc 20 ruptures, allowing propellant gases to flow through the passage 22. As the propellant gases enter the gas chamber 12, the flapper valve 36 flexes away from the inlet opening 44 to allow full flow through the passage 22 into gas chamber 12. As the pressure in the propellant chamber 14 and gas chamber 12 reaches the burst pressure of high pressure burst disc 24, that disc ruptures as illustrated in FIGURE 2. Because the exhaust passage 26 has a relatively large diameter, the propellant chamber 14 can rapidly depressurize by exhausting through the passage 26 past ruptured burst disc 24. As the propellant chamber 14 depressurizes, a higher pressure still exists in the gas chamber 12, causing the flapper valve 36 to flex to its sealed position over the inlet opening 44 to passageway 22. Thus, high pressure gas in the gas chamber 12 can only exhaust through the smaller diameter exhaust orifice 46. By choosing the size of the exhaust orifice 46, the flow rate of gas from the gas chamber 12 can be controlled at a desired level. In this manner, rapid depressurization of the propellant chamber 14 can be achieved to assure extinguishment of the unused propellant 32. However, the pressurized gas in the gas chamber 12 can be more slowly metered out at a desired rate through the orifice 46 in the flapper valve 36.

The present invention has been described in relation to a preferred embodiment. One of ordinary skill after reading the foregoing specification will be able to effect various changes, substitution of equivalents and other alterations without departing from the broad concepts disclosed herein. It is therefore intended that the scope of Letters Patent granted hereon be limited only by the definition contained in the appended claims and equivalents thereof.

CLAIMS:

1.      A   pressurized gas dispensing device including:

means defining a first chamber for holding a gas under pressure;

means defining a second chamber for holding a propellant; and

means defining a flow passage placing said first and second chambers in fluid communication,   characterised by:

valve means associated with said flow passage for allowing bidirectional flow between said chambers at different flow rates, the flow rate from said second chamber to said first chamber being greater than the flow rate from said first chamber to said second chamber.

2.      The gas dispensing device of Claim 1 wherein the end of said passage adjacent said first chamber has an inlet opening communicating with said first chamber,   characterised in that the valve means comprises:

a seal member adapted to cover said inlet opening in sealing relationship and means mounting said member for movement between a first position covering said opening and a second position spaced from said opening, said seal member having an opening therein aligned with said inlet opening when said seal member is in said first position, said opening in said seal member being smaller than said inlet opening.

3.      The gas dispensing device of Claim 2  characterised in that the said seal member comprises:

a flexible member, a portion of said flexible member being affixed to the wall of said second chamber adjacent said inlet opening.

Fig.1.

Fig.2.

Fig.3.